# EUROPÄISCHE PATENTSCHRIFT

(11) **EP 1 027 235 B1**
(45) Veröffentlichungstag und Bekanntmachung des Hinweises auf die Patenterteilung: **23.07.2003**
(21) Anmeldenummer: 98959855.2
(22) Anmeldetag: 06.11.1998
(51) Int. Cl.: B60S 1/08

(54) **VERFAHREN ZUM DETEKTIEREN VON AUF EINER WINDSCHUTZSCHEIBE BEFINDLICHEN OBJEKTEN SOWIE VORRICHTUNG**
METHOD AND DEVICE FOR DETECTING OBJECTS ON A WINDSHIELD
DISPOSITIF ET PROCEDE POUR LA DETECTION D'OBJETS SE TROUVANT SUR UN PARE-BRISE

(30) Priorität: 07.11.1997 DE 19749331
(43) Veröffentlichungstag der Anmeldung: 16.08.2000
(73) Patentinhaber: Leopold Kostal GmbH & Co. KG, 58507 Lüdenscheid (DE)
(72) Erfinder: BLÄSING, Frank, D-59457 Werl (DE)
(74) Vertreter: Haverkamp, Jens
(86) Internationale Anmeldenummer: EP9807085
(87) Internationale Veröffentlichungsnummer: WO99026816

(56) Entgegenhaltungen:
- DE-A- 4 230 068
- DE-A- 19 700 665
- DE-A- 19 704 818
- US-A- 4 867 561
- PATENT ABSTRACTS OF JAPAN vol. 098, no. 013, 30. November 1998 & JP 10 221042 A (OMRON CORP), 21. August 1998

## Beschreibung

Die Erfindung bezieht sich auf das Gebiet des Detektierens von Objekten auf einer durchsichtigen Scheibe. Insbesondere betrifft die Erfindung ein Verfahren zum Detektieren von auf einer Windschutzscheibe befindlichen Objekten sowie eine Vorrichtung zum Detektieren von auf einer Windschutzscheibe befindlichen Objekten, umfassend eine an eine Datenverarbeitungseinheit angeschlossene Aufnahmeeinheit zum innenseitigen Betrachten eines Ausschnittes der Windschutzscheibe, von welcher Datenverarbeitungseinheit Aktoren als Reaktion auf festgestellte Objekte auf der Windschutzscheibe ansteuerbar sind, wobei die Aufnahmeeinheit in einem bestimmten Abstand hinter der Windschutzscheibe angeordnet ist und ein mit einer Blende versehenes, auf die Außenseite der Windschutzscheibe fokussiertes optisches Sensorarray ist.

Eine auch als Regensensor bezeichnete Vorrichtung zum Detektieren von Regentropfen auf einer Windschutzscheibe eines Kraftfahrzeuges zum Steuern eines Scheibenwischermotors ist aus der DE-A1- 197 04 818 bekannt. Diese bekannte Vorrichtung arbeitet nach einem Reflektionsprinzip, wobei an der Außenseite der Windschutzscheibe eine Totalreflektion erfolgt, wenn auf der Außenseite der Windschutzscheibe keine die Totalreflektion störenden Objekte vorhanden sind. Treffen dagegen die Lichtstrahlen auf einen Regentropfen, werden Lichtstrahlen aus dem Regentropfen ausgekoppelt, so daß ein Teil zum Fotodetektor hin reflektiert wird und die gemessene Lichtintensität geringer wird.

Bei diesem bekannten Regensensor wird als Sensorarray ein ein- oder zweidimensionales CCD (Charge-Coupled-Device) verwendet, dessen photosensitiver Oberfläche eine Sammellinse vorgeschaltet ist. Zur Auswertung der durch das Sensorarray erfaßten Strukturen werden die Wandlerelemente des Sensorarrays nach Art eines ein- oder zweidimensionalen Wertefeldes aus dem Sensorarray ausgelesen und mit einem Referenzwertefeld verglichen. Wird eine hinreichende Übereinstimmung mit einem Referenzwertefeld festgestellt, wird ein entsprechendes Steuersignal zum Ansteuern von einem oder mehreren Aktoren bereitgestellt. Als Wertefeld ist eine die Intensitäten einer Bildpunktreihe wiedergebende Kurve vorgesehen.

Dieser Regensensor vermag sich zwar für eine Erkennung von Regentropfen eignen, jedoch kann nicht ausgeschlossen werden, daß die von dem CCD erfaßte Information nicht auch hintergrundsbedingter Herkunft sein kann. Das resultierende Wischergebnis ist somit nicht immer zufriedenstellend. Ferner läßt sich mit dieser Vorrichtung keine spezifische Aussage im Hinblick auf weitere, die Sicht durch die Windschutzscheibe behindernde Objekte erzielen. Auch wenn manche Verschmutzungen der Windschutzscheibe bei den bekannten Vorrichtungen ebenfalls eine Beugung und somit eine verringerte Totalreflektion der Lichtstrahlen zur Folge haben können, kann diese von dem Fotodetektor erfaßte Lichtintensitätsverringerung nicht objektbezogen bewertet werden.

Aus US-A-4867561 ist eine Vorrrichtung, gemäß dem Oberbegriff des Anspruchs 9, zum Detektieren von auf einer Windschutzscheibe befindlichen Objekten bekannt. Bei dem Gegenstand dieses Dokumentes ist dem Sensorarray eine als Objektiv dienende Linse vorgeschaltet, die auf die Ebene der Windschutzscheibe fokussiert ist. Ferner umfasst diese Vorrichtung eine Beleuchtungseinrichtung, durch die der von dem Sensorarray betrachtete Windschutzscheibenausschnitt von der Innenseite der Windschutzscheibe her beleuchtet wird. Die Beleuchtungseinrichtung und das Sensorarray sind dergestalt zueinander angeordnet, dass bei Nichvorhandensein von Wassertropfen auf der Windschutzscheibe eine Totalreflexion eintritt und die emittierten Lichtstrahlen zum Sensorarray hin reflektiert werden. Bei Vorhandensein von Wassertropfen wird mangels Totalreflexion das Sensorarray mit einem geringeren Lichtstrom belichtet. Insofern wird bei dieser Vorrichtung das selbe Prinzip verwirklicht wie bei dem Gegenstand der DE A1 197 04 818. Ausgewertet werden die über das Sensorarray gewonnenen Bilddaten durch Summieren der Belichtungsdaten sämtlicher Wandlerelemente und durch Vergleichen dieses Wertes mit einem Referenzwert. Verfälscht werden diese Bilddaten jedoch dann, wenn umgebungsbedingte Lichtquellen, beispielsweise Reflexe ebenfalls das Sensorarray belichten.

Weiterhin zeigt das Dokument US-A-4 867 561 ein Verfahren zum Detektieren von auf einer Windschutzscheibe befindlichen Objekten, das den folgenden Schritt, der Verfahren gemäß Ansprüche 1 und 2, umfaßt: Aufnehmen eines Ausschnittes der Windschutzscheibe von ihrer Innenseite mit einem auf die Außenseite der Windschutzscheibe fokussierten, eine Vielzahl von einzelnen Bildpunkten aufweisenden optischen Sensorarray.

Ausgehend von diesem diskutierten Stand der Technik liegt der Erfindung daher zum einen die Aufgabe zugrunde, ein Verfahren zum Detektieren von auf einer Windschutzscheibe befindlichen Objekten vorzuschlagen, mit dem eine größere Genauigkeit der ermittelten und ausgewerteten Größen ermöglicht ist.

Ferner liegt der Erfindung die Aufgabe zugrunde, eine gattungsgemäße Vorrichtung zum Detektieren von auf einer Windschutzscheibe befindlichen Objekten bereit zu stellen, mit der eine weitestgehend von Störeinflüssen freie Erfassung und Bestimmung unterschiedlicher auf einer Windschutzscheibe befindlicher Objekte möglich ist.

Während die verfahrensbezogene Aufgabe erfindungsgemäß sowohl durch das in Anspruch 1 als auch das in Anspruch 2 beschriebene Verfahren gelöst werden kann, wird die vorrichtungsbezogene Aufgabe erfindungsgemäß durch die Merkmale des Anspruchs 9 gelöst.

Das erfindungsgemäße Verfahren zum Detektieren von auf einer Windschutzscheibe befindlichen Objekten verwendet die ausgangsseitig an den Bildpunkten des Sensorarrays beim Betrachten einer Szene anliegenden Signalschwankungen des gesamten Bildes oder eines bestimmten Bildbereiches, die entsprechend transformiert als Ortsfrequenzspektren Aufschluß über ein auf der Windschutzscheibe befindliches Objekt geben können. Bezüglich des im Rahmen dieser Ausführungen verwendeten Begriffes Ortsfrequenzspektrum bzw. Ortsfrequenzspektren sei angemerkt, daß dieser Begriff ebenfalls den Verlauf der spektralen Leistungsdichte eines Frequenzbandes über den gesamten oder über einen bestimmten Sensorarraybereich umfaßt. Zu diesem Zweck ist in den auf die Windschutzscheibe gerichteten Strahlengang des Sensorarrays eine Blende und eine Optik eingeschaltet, so daß die photosensitive Obertläche des Sensorarrays auf die Außenseite der Windschutzscheibe fokussiert ist und somit darauf befindliche Objekte scharf auf dem Sensorarray abgebildet sind. Dabei macht sich die Erfindung zunutze, daß ein optisch defokussiertes und somit unscharfes Bild keine scharfen Übergänge von einem Objekt zu einem anderen aufweist. Der Anteil der hohen Ortsfrequenzen, wie sie nach Fourier auch bei Signalsprüngen mit scharfen Übergängen auftreten, ist in einem solchen Bildausschnitt gering. Innerhalb der fokussierten Bildebene sind dagegen - ein Vorhandensein von Objekten vorausgesetzt - scharfe Objektübergänge erfaßbar. Im Rahmen dieser Ausführungen bedeutet der Begriff fokussiert eine hinreichend scharfe Abbildung der Objekte auf der photosensitiven Oberfläche des Sensorarrays, damit sich diese deutlich bezüglich ihrer Abbildungsschärfe von Objekten der Umgebung unterscheiden. Durch den Einsatz einer der Linse vorgeschalteten Blende wird ein bestimmter Schärfentiefenbereich erzeugt, so daß sich beispielsweise auch die innere Oberfläche der Windschutzscheibe verglichen mit Objekten der Umgebung im fokussierten Bereich des Sensorarrays befindet. Sind im Schärfentiefenbereich der Vorrichtung und somit auf der Außenseite der Windschutzscheibe Objekte vorhanden, so weist das Spektrum der ermittelten Ortsfrequenzverteilungen im oberen betrachteten Frequenzbereich größere Werte auf verglichen mit einem auf seine Ortsfrequenzspektren hin dargestellten Bildausschnitt, bei dem außenseitig auf der Windschutzscheibe keine Objekte anhaften.

Mit dem erfindungsgemäßen Verfahren bzw. mit der erfindungsgemäßen Vorrichtung läßt sich durch die unterschiedlichen Abbildungseigenschaften unterschiedlicher Objekte hinsichtlich ihrer Ortsfrequenzspektren eine Aussage bezüglich des auf einer Windschutzscheibe anhaftenden Objektes treffen. Regentropfen können beispielsweise dadurch von opaken Objekten unterschieden werden, daß diese einen dunklen randlichen Saum aufweisen, wohingegen das Innere eines Regentropfens wieder hell abgebildet ist. Ferner kann ausgenutzt werden, daß ein Regentropfen selbst als Linse wirken kann und somit die vor der Windschutzscheibe befindliche Umgebung scharf und seitenverkehrt auf dem Sensorarray abgebildet wird. Durch die seitenverkehrte Abbildung ist der untere Teil eines Regentropfens hell (= Himmel) und der obere Teil dunkel bzw. dunkler (= Umgebung) ausgebildet. Diese Merkmale drücken sich sämtlich in Intensitätsschwankungen im hochfrequenten Bereich der Ortsfrequenzspektren aus. Entsprechend erfolgt eine Ermittlung der Anzahl der auf einer Windschutzscheibe anhaftenden Objekte über den gesamten betrachteten Bildausschnitt. Diese Tatsache ausnutzend ist in einem Ausführungsbeispiel vorgesehen, als Sensorarray eine vertikal ausgerichtete Sensorzeile einzusetzen.

Nach einem Ermitteln der Ortsfrequenzspektren eines Bildausschnittes erfolgt gemäß dem ersten Lösungsvorschlag ein Vergleich der ermittelten Ortsfrequenzspektren mit Referenzfrequenzspektren, die zweckmäßigerweise in einem Speichermodul hinterlegt sind. Bei einer hinreichenden Übereinstimmung der erfaßten Ortsfrequenzspektren mit einem Referenzfrequenzspektrum, beispielsweise bei Feststellen einer bestimmten Regentropfendichte, wird ein Steuersignal bereitsgestellt, mit dem ein bestimmter Aktor, beispielsweise ein Scheibenwischermotor, zum Wegwischen der Regentropfen betätigt wird.

Die Unterscheidung unterschiedlicher Objekte kann dazu ausgenutzt werden, daß bei einer Detektion von Staub oder Schlammspritzern nicht nur der Scheibenwischermotor, sondern auch die Scheibenwaschanlage zum Entfernen des Schmutzes angesteuert wird.

Gemäß dem zweiten Lösungsvorschlag werden die Ortsfrequenzspektren von zu Blöcken zusammengefaßten Bildpunkten des Sensorarrays als Verlauf der spektralen Leistungsdichte eines oder mehrerer Frequenzbänder über alle Blöcke ermittelt und anschließend durch eine neuronale Auswertung bewertet. Diese Auswertung erfolgt mehrstufig, wobei in einem ersten Bewertungsschritt die ermittelten Ortsfrequenzspektren der einzelnen Blöcke mit Hilfe einer Gewichtsmatrix in interne Stimuli des dem Frequenzband zugeordneten Neurons umgewandelt werden. In einem zweiten Bewertungsschritt erfolgt in dem einem jedem Frequenzband zugeordneten Neuron eine Erfassung der Anzahl der Stimuli, welche Anzahl mit einer inneren Feuerschwelle verglichen wird, wobei eine Überschreitung dieses Schwellwertes zu einem Feuern des entsprechenden Neurons führt. Durch das Feuern des entsprechenden Neurons kann dann ein Steuersignal zum Ansteuern eines oder mehrerer Aktoren erzeugt werden.

In einer bevorzugten Ausgestaltung ist vorgesehen, daß das Feuersignal des bzw. der Neuronen ein Statistikmodul beaufschlagen, in das ebenfalls als Eingangsgröße weitere Daten, etwa die Daten einer Belichtungszeitregelung, einer sogenannten Clippingdetektion, Expertenwissen, eine Wischerstandsinformation oder auch weitere Größen Eingang finden, in deren Abhängigkeit dann die tatsächliche Aktorsteuerung erfolgt. Das Statistikmodul vermag ferner zur Adaption der Gewichtsmatrizes, zur Adaption der Feuerbedingungen, zur Steuerung einer aktiven Infrarotbeleuchtung oder dergleichen dienen. Mit einer solchen Auswertung der Ortsfrequenzspektren läßt sich eine exakte Wischersteuerung realisieren, die sich auch ändernden Umgebungsbedingungen selbsttätig anzupassen vermag.

Zweckmäßigerweise erfolgt die Ermittlung der Ortsfrequenzspektren eines mit dem optischen Sensorarray erfaßten Bildes durch Transformieren der Bilddaten mit einer diskreten Cosinustransformation. Bei einer solchen diskreten Cosinustransformation handelt es sich um den Realteil der beidseitigen komplexen Fouriertransformation, wodurch der Rechenaufwand zum realisieren der Transformation verringert wird.

Es ist zweckmäßig, zwischen dem Schritt des Ermittelns der Ortsfrequenzspektren und dem Durchführen des Vergleicherschrittes die einzelnen Ortsfrequenzbänder einer zeitlich rekursiven Tiefpaßfilterung oder auch einer ortsdiskreten zeitlich rekursiven Tiefpaßfilterung zu unterziehen. Durch eine solche Filterung wird eine Auswertung von Phantomfrequenzen unterdrückt.

Da eine robuste Belichtungszeitsteuerung für den Betrieb unter Tageslichtbedingungen einer schnellen Änderung nur mit einer gewissen Totzeit folgen kann, ist es möglich, daß das Sensorsignal für kurze Zeiträume an einzelnen Stellen des Signals übersteuert. Zweckmäßig ist es daher, die einzelnen Bildpunkte des optischen Sensorarrays einer Übersteuerungsbestimmung zuzuführen, in der festgestellt wird, ob einzelne Bildpunkte hinsichtlich ihres Erfassungsbereiches übersteuert sind. Das Signal eines übersteuerten Bildpunktes zeichnet sich nämlich dadurch aus, daß die ansteigende Signalflanke plötzlich in einem scharfen Knick in die Horizontale wechselt. Entsprechend ist auch die andere Signalflanke ausgebildet. Diese beiden Signalknicke führen bei ihrer Transformation in den Ortsfrequenzbereich zu vermeintlichen hochfrequenten Bildanteilen, die aber tatsächlich nicht vorhanden sind. Bei einer festgestellten Übersteuerung eines oder mehrerer Bildpunkte wird dieses bei der Durchführung des Vergleicherschrittes berücksichtigt. Es ist zweckmäßig, wenn die Auswerteeinheit von einer solchen Übersteuerungsüberwachungseinheit entsprechend beeinflußt wird, so daß eine Erzeugung von Stimuli durch die übersteuerten Signalanteile unterbunden wird.

Auch wenn für die bestimmungsgemäße Durchführung des Verfahrens grundsätzlich auf eine zusätzliche Beleuchtung der Windschutzscheibe verzichtet werden kann, können Fahrsituationen auftreten, in denen das Umgebungsrestlicht nicht ausreicht, um auf der Windschutzscheibe anhaftende Objekte zu detektieren. Zu diesem Zweck kann einer solchen Vorrichtung eine Beleuchtungseinrichtung zugeordnet sein, die die Windschutzscheibe von innen beleuchtet. Diese Beleuchtungseinrichtung emittiert Infrarot-Licht dergestalt, daß dieses in wechselnden Einfallswinkeln auf die Windschutzscheibe auftrifft. Die durch die Beleuchtung erzielten Lichtreflexe dienen als Grundlage zum Ermitteln der Ortsfrequenzspektrum im erfaßten Bildausschnitt.

Bei Verwendung eines Kamerasensors als Sensorarray ist es möglich, diesen zusätzlich auch als Aufnahmemodul für andere bildverarbeitende Verfahren zu verwenden.

Weitere Vorteile und Ausgestaltungen der Erfindung sind Bestandteil der übrigen Unteransprüche sowie der nachfolgenden Beschreibung von Ausführungsbeispielen. Es zeigen:
- **Fig. 1**: Eine schematisierte Darstellung einer Vorrichtung zum Detektieren von auf einer Windschutzscheibe befindlichen Objekten,
- **Fig. 2**: gemäß einer ersten Ausgestaltung ein Blockschaltbild zum Auswerten des von einem optischen Sensorarray erfaßten Bildes eines Windschutzscheibenausschnittes,
- **Fig. 3a**: beispielhaft ein Ortsfrequenzspektrum einer betrachteten Windschutzscheibe ohne darauf befindliche Objekte,
- **Fig. 3b**: beispielhaft ein Ortsfrequenzspektrum einer betrachteten Windschutzscheibe mit darauf befindlichen Regentropfen,
- **Fig. 4**: gemäß einer weiteren Ausgestaltung ein Blockschaltbild zum Auswerten des von einem optischen Sensorarray erfaßten Bildes eines Winschutzscheibenausschnittes und
- **Fig. 5**: ein schematisiertes Diagramm zum Darstellen der in Figur 5 verwirklichten Hintergrundunterdrückung.

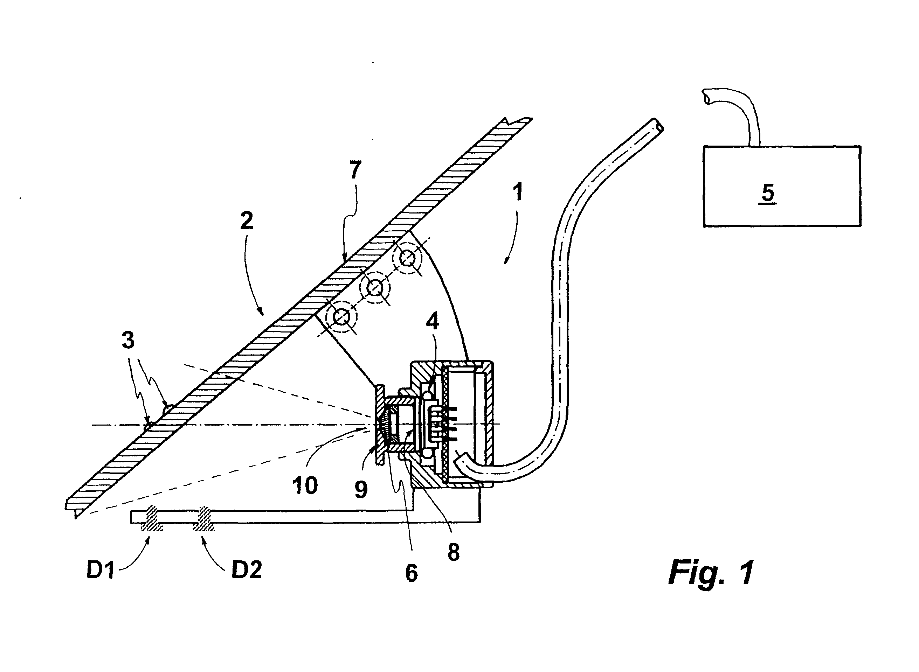

Eine Detektionsvorrichtung 1 zum Detektieren von auf einer Windschutzscheibe 2 befindlichen Objekten 3, wobei es sich bei den in Figur 1 dargestellten Objekten um Regentropfen handelt, ist in einem vorbestimmten Abstand hinter der Windschutzscheibe 2 im Innenraum eines nicht näher dargestellten Kraftfahrzeuges angeordnet. Die Detektionsvorrichtung 1 besteht im wesentlichen aus einer optischen Sensorzeile 4, die an eine Datenverarbeitungseinheit 5 angeschlossen ist. Zwischen der Windschutzscheibe 2 und der Sensorzeile 4 ist eine Linse 6 dergestalt angeordnet, daß die Außenseite 7 der Windschutzscheibe 2 scharf auf der photosensitiven Oberfläche 8 der Sensorzeile 4 abgebildet ist. In den Strahlengang ist vor der Linse eine Lochblende 9 angeordnet, durch deren Aperturöffnung 10 eine bestimmte Schärfentiefe erzielt wird. Die Schärfentiefe gestattet, eine Anordnung der Detektionsvorrichtung 1 mit gewissen Toleranzen hinter der Windschutzscheibe 2 vorzunehmen, ohne daß ein Verlust der gewünschten Abbildungsschärfe hingenommen werden müßte. Ebenfalls kann die Innenseite der Windschutzscheibe 2 im Schärfentiefenbereich der Sensorzeile 4 liegen, so daß die Detektionsvorrichtung 1 ebenfalls zum Erkennen einer innenseitig beschlagenen Windschutzscheibe 2 verwendbar ist. Ferner kann bei einer gewissen Schärfentiefe die Oberfläche 8 der Sensorzeile 4 in einer nicht-parallelen Anordnung zur Windschutzscheibe 2, wie in Figur 1 dargestellt, angeordnet sein, wobei der gesamte, von der Sensorzeile 4 erfaßte Windschutzscheibenausschnitt scharf auf der Oberfläche 8 der Sensorzeile 4 abgebildet wird.

Die Sensorzeile 4 besteht aus einer Vielzahl nebeneinander angeordneter einzelner optoelektronischer Wandlerelemente (Bildpunkte). In dem Kraftfahrzeug ist die Sensorzeile 4 in den Fuß eines nicht näher dargestellten Innenrückspiegels integriert. Die Sensorzeile 4 ist dergestalt in den Spiegelfuß integriert, daß die Zeile vertikal ausgerichtet ist. Zusätzlich umfaßt die Detektionsvorrichtung 1 eine Beleuchtungseinrichtung umfassend vier infrarotlichtemittierende Dioden D1, D2, die außerhalb des Erfassungsbereiches der Sensorzeile 4 sowie außerhalb der Flucht der Sensorzeile 4 angeordnet sind. In Figur 1 sind lediglich die bezüglich der Sensorzeile 4 linksseitig angeordneten IR-Dioden D1, D2 erkennbar. Diese Beleuchtungseinrichtung dient zum Beleuchten der Windschutzscheibe 2 von innen, wenn nicht genügend Umgebungslicht vorhanden ist, um auf der Windschutzscheibe 2 befindliche Objekte zu detektieren. Dabei ist bei dem dargestellten Ausführungsbeispiel vorgesehen, daß die IR-Diode D1 gemeinsam mit der dieser Diode D1 diagonal gegenüberliegenden und zur IR-Diode D2 benachbarten Diode und entsprechend die IR-Diode D2 mit der ihr diagonal gegenüberliegenden Diode betrieben werden, so daß die Windschutzscheibe 2 wechselweise mit unterschiedlichen Einfallswinkeln der IR-Lichtstrahlen beleuchtet wird. Auf diese Weise können unter anderem objektbezogene Lichtreflexe von anderen parasitären Lichtreflexen unterschieden werden.

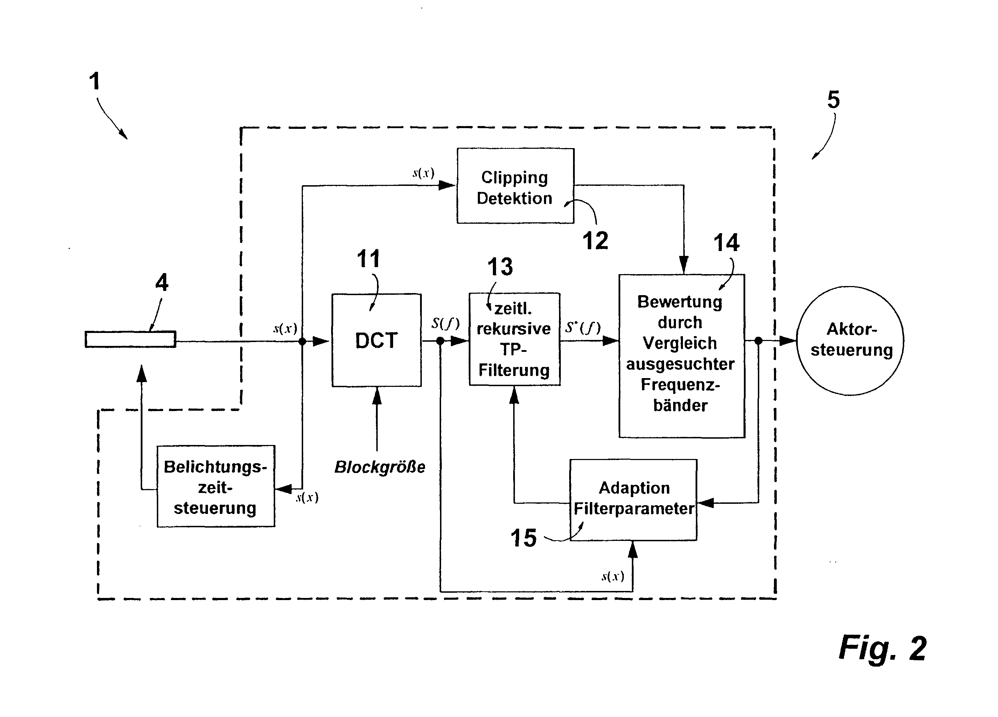

Ein schematisches Blockschaltbild der Auswerteeinheit 5 ist in Figur 2 dargestellt. Die Sensorzeile 4 ist ausgangsseitig an den Eingang der Auswerteeinheit 5 angeschlossen. Die Steuerung der Detektionsvorrichtung 1 wird durch einen nicht näher dargestellten Mikroprozessor übernommen, Von diesem erfolgt eine Belichtungszeitsteuerung, welches Steuersignal die Sensorzeile 4 beaufschlagt.

Die von den einzelnen Bildpunkten der Sensorzeile 4 ausgelesenen Signale s(x) beaufschlagen den Eingang eines Transformationsmoduls 11, in dem die Signale s(x) hinsichtlich ihrer Intensitätsschwankungen untersucht werden. Durch Transformieren der Bilddaten mit einer diskreten Cosinustransformation können diese Intensitätsschwankungen innerhalb eines bestimmten Bildbereiches oder auch über das gesamte erfaßte Bild hinweg als Ortsfrequenzspektrum *S(f)* dargestellt werden.

Parallel zu dem Schritt des Ermittelns der Ortsfrequenzspektren *S(f)* beaufschlagen die aus der Sensorzeile 4 ausgelesenen Signale *s(x)* auch eine Übersteuerungsüberwachungseinheit 12 zum Durchführen einer Clippingdetektion. Diese Übersteuerungsüberwachungseinheit 12 dient zum Detektieren von übersteuerten Bildpunkten, die aufgrund ihrer Signalausbildung als hochfrequente Schwankung bei der Ermittlung der Ortsfrequenzspektren erkannt werden würden. Durch die Übersteuerungsüberwachungseinheit 12 wird ein Steuersignal erzeugt, wenn einer oder mehrere Bildpunkte hinsichtlich der erfaßten Lichtintensität übersteuert sind.

An den Ausgang des Transformationsmoduls 11 ist der Eingang eines rekursiv arbeitenden zeitlichen Tiefpaßfilters 13 angeschlossen. In diesem Tiefpaßfilter 13 erfolgt eine Filterung der Frequenzbänder zur Vermeidung einer weiteren Auswertung von Phantomfrequenzen. Die zeitlich tiefpaßgefilterten Frequenzbänder *S*(f)* beaufschlagen eine Komparatoreinheit 14, deren weiterer Eingang an den Ausgang der Übersteuerungsüberwachungseinheit 12 angeschlossen ist. Der Tiefpaßfilter 13 ist über eine Adaptionseinheit 15 hinsichtlich seiner Filterparameter adaptierbar, wobei die Adaptionseinheit 15 an den Ausgang der Komparatoreinheit 14 angeschlossen ist.

In der Komparatoreinheit 14 erfolgt ein Vergleichen der zeitlich tiefpaßgefilterten Ortsfrequenzspektren *S*(f)* mit Referenzfrequenzbändem, die in einem Speichermodul abgelegt sind. Der Vergleich dient zur Bewertung der erfaßten Bilddaten der Sensorzeile 4, d.h. eine Bewertung hinsichtlich der auf der Außenseite der Windschutzscheibe 2 anhaftenden Objekte, die durch unterschiedliche Ortsfrequenzspektren erkennbar sind. Wird ein Ortsfrequenzband eines Bildes der Sensorzeile 4 als bekannt erkannt, wird ein Steuersignal zum Ansteuern der benötigten Aktoren erzeugt, bei welchen es sich bei dem in Figur 1 dargestellten Ausführungsbeispiel um einen Scheibenwischermotor handelt.

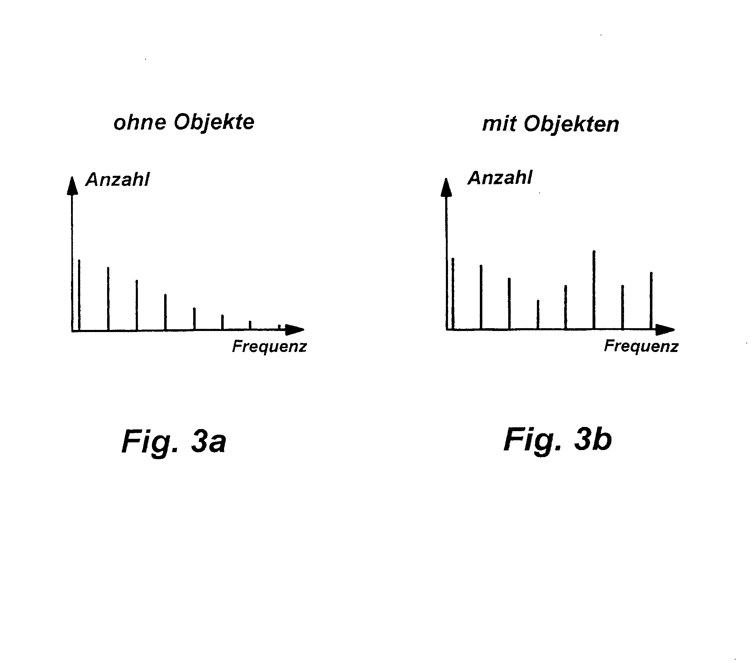

Ein Vergleich zwischen dem Ortsfrequenzspektrum eines Zeilenbildes der Sensorzeile 4 ohne auf der Außenseite der Windschutzscheibe 2 anhaftende Objekte sowie mit auf der Windschutzscheibe anhaftenden Regentropfen 3 ist in den Figuren 3a und 3b dargestellt. Figur 3a zeigt die Ortsfrequenzspektren eines Bildes einer freien Windschutzscheibe; Figur 3b zeigt die Windschutzscheibe 2 mit den außenseitig darauf anhaftenden Regentropfen 3, wie in Figur 1 dargestellt. Aufgetragen ist in den Diagrammen auf der y-Achse die Häufigkeit der Schwankungen (Anzahl) und auf der x-Achse die Frequenz. Ein Vergleich der beiden Diagramme macht deutlich, daß das Ortsfrequenzspektrum des freien Windschutzscheibenausschnittes im hohen Frequenzbereich nur geringe Energien aufweist. Anders verhält sich dagegen der hochfrequente Bereich bei der in Figur 1 gezeigten Windschutzscheibe 2 mit den darauf anhaftenden Regentropfen 3 (vgl. Figur 3b). Die durch die Regentropfen 3 hervorgerufenen Intensitätsschwankungen bilden sich durch entsprechende Intensitäten im hohen Frequenzbereich ab. Die Detektion eines solchen, wie beispielhaft in Figur 3 wiedergegebenen Ortsfrequenzspektrums ermöglicht den Rückschluß, daß Objekte an der Außenseite der Windschutzscheibe anhaften. In Abhängigkeit von dem Auflösungsvermögen der Sensorzeile 4 können auf diese Weise unterschiedliche auf der Windschutzscheibe befindliche Objekte durch eine unterschiedliche Ausbildung ihrer hochfrequenten Ortsfrequenzspektren erkannt werden. Unterschieden werden können Ortsfrequenzspektren nicht nur hinsichtlich einer Objekterkennung, sondern auch in welcher Häufigkeit diese Objekte sich auf der Windschutzscheibe befinden. Entsprechend können auch Objektmischungen erkannt werden. Ein Vergleich der Ortsfrequenzspektren in der Komparatoreinheit 14 kann auch dergestalt durchgeführt werden, daß lediglich eine hinreichende Übereinstimmung der zu bewertenden Ortsfrequenzspektren mit solchen in einem Speichermodul hinterlegten erfolgt.

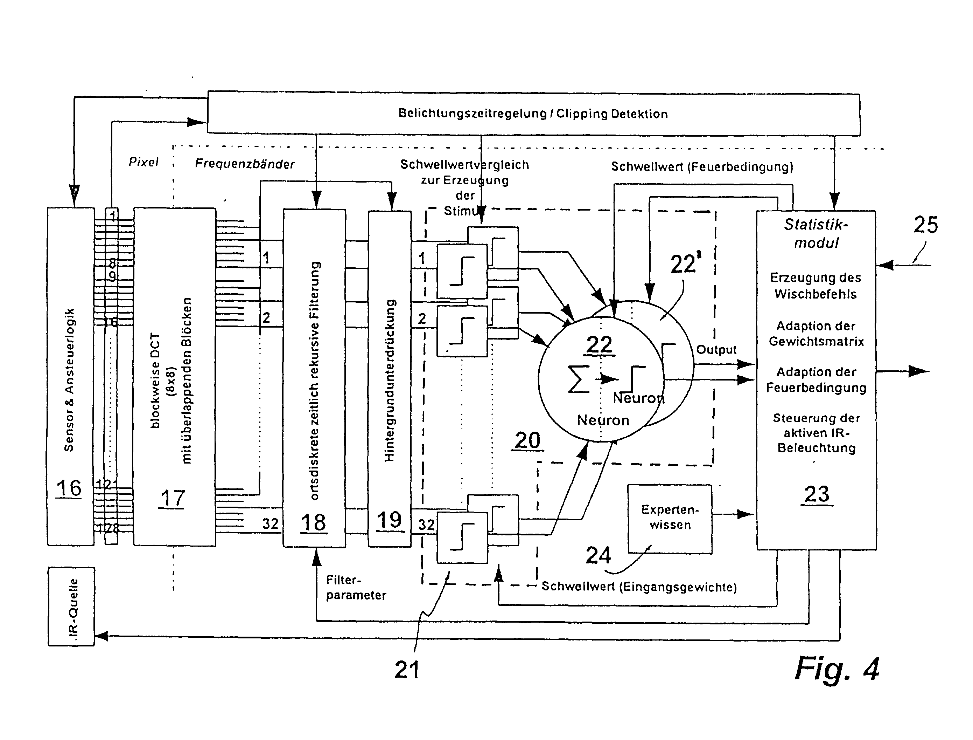

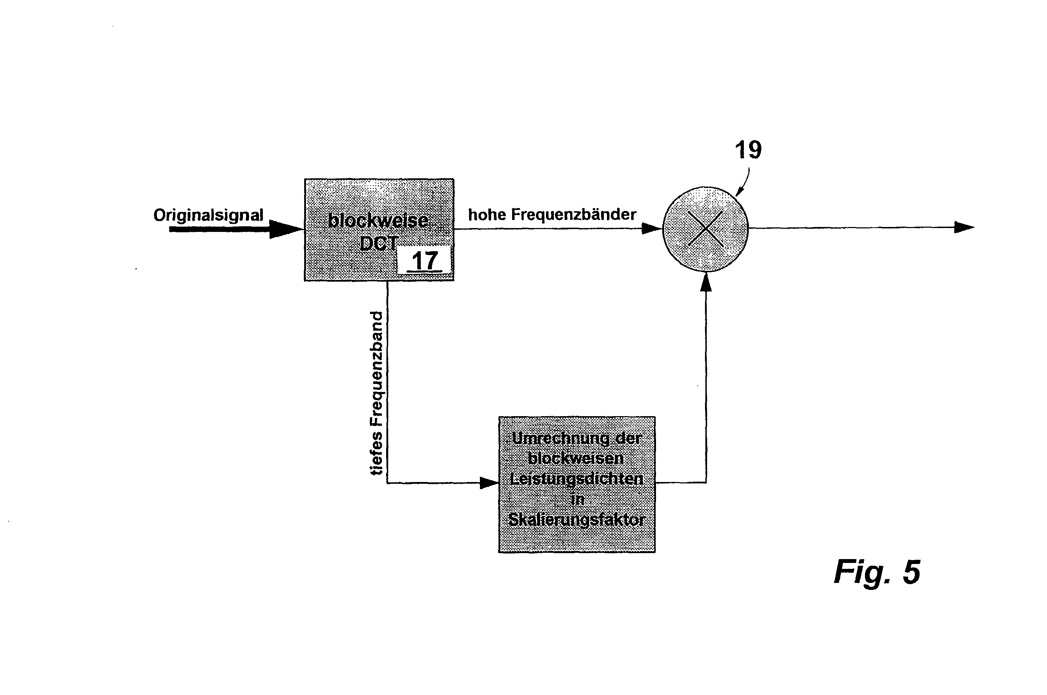

In Figur 4 ist in einem schematisierten Blockschaltbild ein weiteres Verfahren zur Detektion von auf einer Windschutzscheibe befindlichen Objekten dargestellt. Bei dem dargestellten Verfahren wird ein Zeilensensor 16 mit 128 Wandlerelementen verwendet. Die einzeln ausgelesenen Intensitätswerte der Wandler beaufschlagen ein Transformationsmodul 17, in dem die Intensitäten blockweise mit jeweils überlappenden Blöcken einer diskreten Cosinustransformation zum Ermitteln der Ortsfrequenzspektren als Verlauf der spektralen Leistungsdichte über ein Frequenzband unterworfen werden. Die in diesem Ausführungsbeispiel gewählte Blockgröße beträgt 8 Wandlerelemente, so daß mit einer entsprechenden Überlappung mit den angrenzenden Blöcken 32 Ortsfrequenzspektren ausgangsseitig am Transformationsmodul 17 für jedes zu untersuchende Frequenzband, wobei bei dem dargestellten Ausführungsbeispiel zwei Frequenzbänder bewertet werden, abgreifbar sind. Zur Eliminierung von Phantomfrequenzen werden die Ortsfrequenzspektren in einem weiteren Bearbeitungsschritt ortsdiskret und zeitlich rekursiv gefiltert. Zu diesem Zweck ist ausgangsseitig an das Transformationsmodul 17 ein Filtermodul 18 angeschlossen. Der Ausgang des Filtermoduls 18 beaufschlagt den Eingang eines Hintergrundunterdrückungsmoduls 19 zur weiteren Unterdrückung umgebungsbedingter Störeinflüsse. Eine Beschreibung der verwendeten Hintergrundunterdrückung ist weiter unten zu Figur 5 beschrieben. Die nunmehr entsprechend gefilterten und bezüglich auftretender Hintergrunderscheinungen angepaßten Ortsfrequenzspektren der 32 Blöcke beaufschlagen anschließend ein Bewertungsmodul 20. In dem Bewertungsmodul erfolgt eine neuronale Auswertung der eingangsseitig anliegenden Ortsfrequenzspektren bezüglich der beiden gewünschten Frequenzbänder. Die Bewertung erfolgt zweistufig, wobei in einem ersten Schritt die Ortsfrequenzspektren Gewichtsmatrix 21 beaufschlagen, in der ein Schwellwertvergleich zum Erzeugen von Stimuli der Ortsfrequenzspektren mit Referenzspektren erfolgt. Bei jedem Vergleich zwischen einem Ortsfrequenzspektrum eines Blockes bzw. Leistungsbandes, bei dem eine Schwellwertüberschreitung festgestellt wird, wird ein Stimulus erzeugt, der einem dem jeweiligen Frequenzband zugeordneten Neuron 22, 22' zum Durchführen eines weiteren Bewertungsschrittes zugeordnet wird. In jedem Neuron 22, 22' erfolgt eine Aufsummierung der in einem Takt eingegangenen Stimuli und ein Vergleich mit einer Schwellwertanzahl (= Feuerschwelle). Erhält ein Neuron 22, 22' Stimuli in einer Anzahl, daß die Feuerschwelle überschritten ist, ist die Feuerbedingung des Neurons erfüllt, so daß das jeweilige Neuron 22 bzw. 22' feuert.

Der Einsatz eines neuronalen Auswertesystems erlaubt eine Anpassung der durchzuführenden Vergleichsschritte an sich ändernde Umgebungsbedingungen mit einer gegenüber einer einstufigen Auswertung sehr viel höheren Variabilität. Entsprechend verbessert ist das Wischergebnis bei Einsatz dieses Auswerteverfahrens.

Umgebungsbedingungen und vorbekannte Bedingungen werden über ein Statistikmodul 23, in welches auch der Inhalt eines Expertenmoduls 24 mit bestimmten Expertenwissen Eingang findet, dem Auswerteverfahren bzw. seinen einzelnen Modulen 18, 19, 20 zur Verfügung gestellt. Die gefeuerten Ausgangssignale der Neuronen 22, 22' beaufschlagen daher das Statistikmodul 23. Ein zur Aktorsteuerung vorgesehener Steuerbefehl wird jedoch von dem Statistikmodul 23 nur dann erzeugt, wenn bestimmte weitere Bedingungen, die ein tatsächliches Wischen der Windschutzscheibe notwendig machen, gegeben sind. Über einen Eingang 25 wird das Statistikmodul 23 ebenfalls mit einer Information betreffend den Wischerstand beaufschlagt.

Das Statistikmodul 23 nimmt über entsprechende Steuersignale Einfluß auf die Filterparameter des Filtermoduls 18, der Gewichtsmatrizes 21 sowie auf die Neuronen 22, 22'. Darüber hinaus wird über das Statistikmodul 23 die der Aufnahmeeinheit 16 zugeordnete Infrarot-Beleuchtung bei Bedarf angesteuert.

Das zu Figur 4 dargestellte Auswerteverfahren wird ferner durch eine Belichtungszeitregelung sowie durch eine Übersteuerungserkennung (Clippingdetektion) moduliert, die mehrere Module beaufschlagt und entsprechend dem zu Figur 2 beschriebenen Ausführungsbeispiel arbeitet.

Das Hintergrundunterdrückungsmodul 19 arbeitet gemäß dem in Figur 5 schematisch wiedergegebenen Ablauf. Diese in dem Hintergrundunterdrückungsmodul 19 durchgeführte Unterdrückung von störenden umgebungsbedingten Einflüssen macht sich die Erkenntnis zugrunde, daß umgebungsbedingte Signalanteile hoher Dynamik sich sowohl in hohen als auch in tiefen Frequenzbändern bemerkbar machen, wohingegen auf der Windschutzscheibe befindliche Gegenstände, etwa Regentropfen Intensitäten lediglich in hohen Frequenzbändern erzeugen. Zur Unterdrückung der umgebungsbedingten Intensitäten in den zu untersuchenden hohen Frequenzbändern werden die sich in tiefen Frequenzbändern widerspiegelnden Intensitäten dargestellt durch die blockweisen Leistungsdichten in einen Skallierungsfaktor umgerechnet, mit dem die zu untersuchenden hohen Frequenzbänder abgeglichen werden. Dies kann entweder durch eine Unterdrückung dieser Frequenzanteile im Hintergrundunterdrükkungsmodul 19 oder auch durch eine entsprechende Adaption der ersten Gewichtsmatrix 21 geschehen.

Die aufgezeigten Verfahrensschritte zum Auswerten der Sensorarraysignale können teilweise oder auch insgesamt als Datenverarbeitungsprogramm realisiert sein.

### Zusammenstellung der Bezugszeichen

- 1: Detektionsvorrichtung
- 2: Windschutzscheibe
- 3: Regentropfen
- 4: Sensorzeile
- 5: Auswerteeinheit
- 6: Linse
- 7: Außenseite der Windschutzscheibe
- 8: photosensitive Oberfläche der Sensorzeile
- 9: Lochblende
- 10: Aperturöffnung
- 11: Transformationsmodul
- 12: Übersteuerungsüberwachungseinheit
- 13: Tiefpaßfilter
- 14: Komparatoreinheit
- 15: Adaptionseinheit
- 16: Zeilensensor
- 17: Transformationsmodul
- 18: Filtermodul
- 19: Hintergrundunterdrückungsmodul
- 20: Bewertungsmodul
- 21: Gewichtsmatrix
- 22, 22': Neuron
- 23: Statistikmodul
- 24: Expertenmodul
- 25: Eingang

- D1, D2: IR-Dioden
- *s(x)*: Bildsignal
- *S(f)*: Ortsfrequenzspektrum
- *S*(f)*: tiefpaßgefiltertes Ortsfrequenzspektrum

## Patentansprüche

1. Verfahren zum Detektieren von auf einer Windschutzscheibe (2) befindlichen Objekten (3) umfassend folgende Schritte:
- Aufnehmen eines Ausschnittes der Windschutzscheibe (2) von ihrer Innenseite mit einem auf die Außenseite (7) der Windschutzscheibe (2) fokussierten, eine Vielzahl von einzelnen Bildpunkten aufweisenden optischen Sensorarray (4),
- blockweises Ermitteln der Ortsfrequenzspektren (*S(f)*) der Intensitätschwankungen von zu mehreren Blöcken zusammengefaßten Bildpunkten des Sensorarrays (4) und anschließendes
- Auswerten der Ortsfrequenzspektren, wobei die blockweise ermittelten Ortsfrequenzspektren (*S(f)*) mit Referenzfrequenzverteilungen verglichen werden und wobei bei hinreichender Übereinstimmung der ermittelten Ortsfrequenzspektren (*S(f)*) mit den Referenzfrequenzverteilungen ein Steuersignal zum Ansteuern von einem oder von mehreren Aktoren erzeugt wird.

2. Verfahren zum Detektieren von auf einer Windschutzscheibe (2) befindlichen Objekten (3) umfassend folgende Schritte:
- Aufnehmen eines Ausschnittes der Windschutzscheibe (2) von ihrer Innenseite mit einem auf die Außenseite (7) der Windschutzscheibe (2) fokussierten, eine Vielzahl von einzelnen Bildpunkten aufweisenden optischen Sensorarray (4),
- Ermitteln der Ortsfrequenzspektren (*S(f)*) der Intensitäten von zu Blöcken zusammengefaßten Bildpunkten des Sensorarrays (4) als Verlauf der spektralen Leistungsdichte eines oder mehrerer Frequenzbänder über alle Blöcke und anschließendes
- Auswerten der Ortsfrequenzspektren der Blöcke durch eine mehrstufige Bewertung der Ortsfrequenzspektren hinsichtlich eines Verlaufes der spektralen Leistungsdichte des oder der Frequenzbänder über die Bildpunkte der Blöcke, wobei in einem ersten Bewertungsschritt die Ortsfrequenzspektren von jedem Block bezüglich des oder der Frequenzbänder mit einer Referenzfrequenzverteilung verglichen und bei Überschreiten eines Schwellwertes des block- und frequenzbandbezogenden Vergleiches ein Signal bereitgestellt wird und wobei in einem zweiten Bewertungsschritt die Anzahl der in Bezug auf das oder die Frequenzbänder durch den ersten Bewertungsschritt bereitgestellten Signale erfaßt und mit einem auf das jeweilige Frequenzband bezogenen Schwellwert verglichen und bei Überschreiten eines Schwellwertes ein Steuersignal zum Ansteuern von einem oder von mehreren Aktoren erzeugt wird.

3. Verfahren nach Anspruch 1 oder 2, **dadurch gekennzeichnet, daß** die Ortsfrequenzspektren (*S(f)*) der in dem mit dem Sensorarray (4) erfaßten Bild enthaltenen Strukturen durch Transformieren der Bilddaten (*s(x)*) mit einer diskreten Cosinustransformation ermittelt werden.

4. Verfahren nach Anspruch 1 oder 2, **dadurch gekennzeichnet, daß** sich an den Schritt des Ermittelns der Ortsfrequenzspektren (*S(f)*) der auf dem erfaßten Bild abgebildeten Strukturen *(s(x))* der Schritt einer zeitlich rekursiven Tiefpaßfilterung der einzelnen Frequenzbänder anschließt.

5. Verfahren nach Anspruch 4, **dadurch gekennzeichnet, daß** die Filterparameter der Tiefpaßfilterung adaptierbar sind.

6. Verfahren nach einem der Ansprüche 1 bis 5, **dadurch gekennzeichnet, daß** vor der Ermittlung der Ortsfrequenzspektren (*S(f)*) der auf dem erfaßten Bild abgebildeten Strukturen *(s(x))* eine Übersteuerungsbestimmung der einzelnen Bildpunkte des optischen Sensorarrays (4) erfolgt und daß bei einer festgestellten Übersteuerung eines oder mehrerer Bildpunkte diese Feststellung bei der Durchführung des Vergleicherschrittes berücksichtigt wird.

7. Verfahren nach einem der Ansprüche 1 bis 6, **dadurch gekennzeichnet, daß** der von dem optischen Sensorarray (4) erfaßte Windschutzscheibenausschnitt von innen mit Infrarot-Licht mit sich während der Beleuchtung ändernden Einfallsrichtungen beleuchtet wird.

8. Verfahren nach einem der Ansprüche 1 bis 7, **dadurch gekennzeichnet, daß** zwischen dem Schritt des Ermittelns der Orfsfrequenzspektren (*S(f)*) und dem Schritt des Auswertens der Ortsfrequenzsspektren (*S(f)*) der Schritt einer Hintergrundunterdrückung durchgeführt wird, wobei die hohen Frequenzbänder in Abhängigkeit der in tiefen Frequenzbändern erfaßten Intensitätsschwankungen moduliert werden.

9. Vorrichtung zum Detektieren von auf einer Windschutzscheibe (2) befindlichen Objekten (3) umfassend eine an eine Datenverarbeitungseinheit (5) angeschlossene Aufnahmeeinheit (4, 16) zum innenseitigen Betrachten eines Ausschnittes der Windschutzscheibe (2), von welcher Datenverarbeitungseinheit (5) Aktoren als Reaktion auf festgestellte Objekte auf der Windschutzscheibe (2) ansteuerbar sind, wobei die Aufnahmeeinheit (4) in einem bestimmten Abstand hinter der Windschutzscheibe (2) angeordnet ist und ein mit einer Blende (9) versehenes, auf die Außenseite (7) der Windschutzscheibe (2) fokussiertes optisches Sensorarray (4, 16) ist, **dadurch gekennzeichnet, daß** die ausgangsseitig an das optische Sensorarray (4, 16) angeschlossene Datenverarbeitungseinheit (5) ein Transformationsmodul (11, 17) zum Ermitteln der Ortsfrequenzspektren (*S(f)*) der auf dem erfaßten Bild abgebildeten Strukturen *(s(x))* und eine Auswerteeinheit (14, 20) zum Auswerten der ermittelten Ortsfrequenzspektren (*S(f)*) aufweist.

10. Vorrichtung nach Anspruch 9, **dadurch gekennzeichnet, daß** als optisches Sensorarray ein Kamerasensor mit einer Einlinsenoptik und einer einer dieser vorgeschalteten Lochblende vorgesehen ist.

11. Vorrichtung nach Anspruch 9, **dadurch gekennzeichnet, daß** als optisches Sensorarray eine Sensorzeile (4, 16) mit einer Einlinsenoptik (6) und einer dieser vorgeschalteten Lochblende (9) vorgesehen ist.

12. Vorrichtung nach Anspruch 11, **dadurch gekennzeichnet, daß** zwischen dem Transformationsmodul (11, 17) und der Auswerteeinheit (14, 20) ein zeitlich rekursiv arbeitendes Tiefpaßfilter (13, 18) angeordnet ist.

13. Vorrichtung nach einem der Ansprüche 9 bis 12, **dadurch gekennzeichnet, daß** der Datenverarbeitungseinheit (5) eine Übersteuerungsüberwachungseinheit (12) zum Durchführen einer Übersteuerungsbestimmung der einzelnen Bildpunkte des optischen Sensorarrays (4) zugeordnet ist.

14. Vorrichtung nach einem der Ansprüche 9 bis 13, **dadurch gekennzeichnet, daß** als Auswerteeinheit eine nach neuronalen Prinzipien arbeitende Auswerteeinheit (20) vorgesehen ist.

15. Vorrichtung nach einem der Ansprüche 9 bis 13, **dadurch gekennzeichnet, daß** der Detektionsvorrichtung (1) eine Beleuchtungseinrichtung (D1, D2) zum Beleuchten der Windschutzscheibe (2) von der Innenseite mit Infrarot-Licht zugeordnet ist, welche Beleuchtungseinrichtung (D1, D2) hinsichtlich des von dem Sensorarray (4, 16) erfaßten Bildmittelpunktes zum Beleuchten des Windschutzscheibenausschnittes aus wechselnden Richtungen ausgebildet ist.

## Claims

1. Method of detecting objects (3) situated on a windscreen (2), said method including the following steps:
- sensing a portion of the windscreen (2) from its internal surface with an optical sensor array (4), which is focussed upon the external surface (7) of the windscreen (2) and includes a plurality of individual image points,
- determining, in blocks, the spatial frequency spectra (*S(f)*) of the variations in intensity of image points of the sensor array (4), which are combined to form a plurality of blocks, and subsequently
- evaluating the spatial frequency spectra, the spatial frequency spectra (*S(f)*), which have been determined in blocks, being compared with reference frequency distributions, and a control signal being generated to actuate one or more actuators if the determined spatial frequency spectra (*S(f)*) are sufficiently consistent with the reference frequency distributions.

2. Method of detecting objects (3) situated on a windscreen (2), said method including the following steps:
- sensing a portion of the windscreen (2) from its internal surface with an optical sensor array (4), which is focussed upon the external surface (7) of the windscreen (2) and includes a plurality of individual image points,
- determining the spatial frequency spectra (*S(f)*) of the intensities of image points of the sensor array (4), which are combined to form blocks, as a pattern for the spectral power density of one or more frequency bands over all of the blocks, and subsequently
- evaluating the spatial frequency spectra of the blocks by a multiple-stage evaluation of the spatial frequency spectra in respect of a pattern for the spectral power density of the frequency band or bands over the image points of the blocks, the spatial frequency spectra of each block in respect of the frequency band or bands being compared with a reference frequency distribution in a first evaluation step, and a signal being provided if a threshold value of the block- and frequency band-related comparison is exceeded, and the number of signals, provided by the first evaluation step in respect of the frequency band or bands, being detected in a second evaluation step, and said signals being compared with a threshold value relating to the respective frequency band, and a control signal being generated to actuate one or more actuators if a threshold value is exceeded.

3. Method according to claim 1 or 2, **characterised in that** the spatial frequency spectra (*S(f)*) of the structures contained in the image detected with the sensor array (4) are determined by transforming the image data (*s(x)*) with a discrete cosine transformation.

4. Method according to claim 1 or 2, **characterised in that**, subsequent to the step for determining the spatial frequency spectra (*S(f)*) of the structures (*s(x)*), reproduced on the detected image, there is the step for a time-recursive low-pass filtering of the individual frequency bands.

5. Method according to claim 4, **characterised in that** the filter parameters of the low-pass filtering are adaptable.

6. Method according to one of claims 1 to 5, **characterised in that**, prior to the determination of the spatial frequency spectra (*S(f)*) of the structures (*s(x)*), reproduced on the detected image, an override determination of the individual image points of the optical sensor array (4) is effected, and **in that**, if an overriding of one or more image points is confirmed, this confirmation is taken into consideration when the comparison step is carried out.

7. Method according to one of claims 1 to 6, **characterised in that** the windscreen portion, detected by the optical sensor array (4), is illuminated from internally with infra-red light at directions of incidence which change during the illumination.

8. Method according to one of claims 1 to 7, **characterised in that** the step for background suppression is carried out between the step for determining the spatial frequency spectra (*S(f)*) and the step for evaluating the spatial frequency spectra (*S(f)*), the high frequency bands being modulated in dependence on the intensity variations detected in low frequency bands.

9. Apparatus for detecting objects (3) situated on a windscreen (2), said apparatus including a pick-up unit (4,16), which communicates with a data processing unit (5), for surveying the internal surface of a portion of the windscreen (2), by which data processing unit (5) actuators are actuatable as a reaction to detected objects on the windscreen (2), the pick-up unit (4) being disposed at a predetermined spacing behind the windscreen (2) and being an optical sensor array (4,16), which is provided with a diaphragm (9) and is focussed upon the external surface (7) of the windscreen (2), **characterised in that** the data processing unit (5), which communicates with the optical sensor array (4,16) at the output end, includes a transformation module (11,17) for determining the spatial frequency spectra (*S(f)*) of the structures (*s(x)*), which are reproduced on the detected image, and an evaluating unit (14, 20) for evaluating the determined spatial frequency spectra (*S(f)*).

10. Apparatus according to claim 9, **characterised in that** a camera sensor, having a single-lens optical system and an apertured diaphragm, which precedes said system, is provided as the optical sensor array.

11. Apparatus according to claim 9, **characterised in that** a sensor cell (4, 16), having a single-lens optical system (6) and an apertured diaphragm (9), which precedes said system, is provided as the optical sensor array.

12. Apparatus according to claim 11, **characterised in that** a low-pass filter (13, 18), which operates in a time-recursive manner, is disposed between the transformation module (11, 17) and the evaluating unit (14, 20).

13. Apparatus according to one of claims 9 to 12, **characterised in that** the data processing unit (5) has associated therewith an override monitoring unit (12) for carrying out an override determination of the individual image points of the optical sensor array (4).

14. Apparatus according to one of claims 9 to 13, **characterised in that** an evaluating unit (20), which operates according to neuronal principles, is provided as the evaluating unit.

15. Apparatus according to one of claims 9 to 13, **characterised in that** the detecting apparatus (1) has associated therewith an illuminating means (D1, D2) for illuminating the windscreen (2) from the inside with infra-red light, which illuminating means (D1, D2) is configured in respect of the image centre, detected by the sensor array (4, 16), to illuminate the windscreen portion from alternating directions.

## Revendications

1. Procédé pour la détection d'objets (3) se trouvant sur un pare-brise (2) comportant les étapes suivantes :
- Enregistrement d'une section du pare-brise (2) par sa face intérieure à l'aide d'un bloc de détection optique (4) comportant une multitude de points d'image, focalisé sur la face extérieure (7) du pare-brise (2),
- Détermination par blocs des spectres de fréquence de lieu (*S(f)*) des variations d'intensité de plusieurs points d'image du bloc de détection optique (4) rassemblés en plusieurs blocs,
- Evaluation des spectres de fréquence de lieu sachant que les spectres de fréquence de lieu (*S(f)*) déterminés par blocs sont comparés à des répartitions de fréquences de référence et sachant qu'en cas de concordance suffisante des spectres de fréquence de lieu (*S(f)*) déterminés avec les répartitions de fréquences de référence un signal de commande est produit afin de commander un ou plusieurs acteurs.

2. Procédé pour la détection d'objets (3) se trouvant sur un pare-brise (2) comportant les étapes suivantes :
- Enregistrement d'une section du pare-brise (2) par sa face intérieure à l'aide d'un bloc de détection optique (4) comportant une multitude de points d'image, focalisé sur la face extérieure (7) du pare-brise (2),
- Détermination des spectres de fréquence de lieu (S(f)) des intensités de plusieurs points d'image du bloc de détection optique (4) rassemblés en blocs, en tant que tracé de puissance volumique spectrale d'une ou de plusieurs bandes de fréquence à travers tous les blocs, puis
- Evaluation des spectres de fréquence de lieu des blocs par une exploitation à plusieurs niveaux des spectres de fréquence de lieu en ce qui concerne le tracé de la puissance volumique spectrale de la ou des bandes de fréquence à travers les points d'image des blocs, sachant qu'au cours d'une première étape d'évaluation les spectres de fréquence de lieu de chaque bloc sont comparés, par rapport à la ou aux bandes de fréquence, avec une répartition des fréquences de référence et qu'un signal est mis à disposition en cas de dépassement d'une valeur de seuil lors de la comparaison au niveau des blocs et des bandes de fréquence et sachant qu'au cours d'une seconde étape d'évaluation, la quantité de signaux mis à disposition au cours de la première étape d'évaluation et se rapportant à la ou aux bandes de fréquence est enregistrée et comparée avec une valeur de seuil affectée à la bande de fréquence correspondante et qu'en cas de dépassement de la valeur de seuil, un signal de commande est généré pour commander un ou plusieurs acteurs.

3. Procédé selon la revendication 1 ou 2 **caractérisé en ce que** les spectres de fréquence de lieu (*S(f)*) des structures contenues dans l'image enregistrée à l'aide du bloc de détection optique (4) sont déterminés par transformation des données d'image *(s(x))* à l'aide d'une transformation cosinus discrète.

4. Procédé selon la revendication 1 ou 2 **caractérisé en ce que** l'étape de détermination des spectres de fréquence de lieu (*S(f)*) des structures *(s(x))* représentées sur l'image captée est suivie par une étape de filtrage passe-bas chronologiquement récursif de chaque bande de fréquence.

5. Procédé selon la revendication 4 **caractérisé en ce que** les paramètres de filtrage du filtrage passe-bas sont adaptables.

6. Procédé selon l'une des revendications 1 à 5 **caractérisé en ce que** la détermination des spectres de fréquence de lieu (*S(f)*) des structures (*s(x)*) représentées sur l'image captée est précédée d'une détermination de la saturation de chaque point d'image du bloc de détection optique (4) et qu'en cas de constatation d'une saturation d'un ou de plusieurs points d'image, cela est pris en compte lors de la réalisation de l'étape de comparaison.

7. Procédé selon l'une des revendications 1 à 6, **caractérisé en ce que** la section de pare-brise captée par le bloc de détection optique (4) est éclairée par l'intérieur par une lumière infrarouge selon un angle d'incidence variable au cours de l'éclairage.

8. Procédé selon l'une des revendications 1 à 7 **caractérisé en ce qu'**il comporte une étape de suppression de l'arrière-plan entre l'étape de détermination des spectres de fréquence de lieu (*S(f)*) et l'étape d'évaluation des spectres de fréquence de lieu (*S(f)*), sachant que les bandes de fréquence élevées sont modulées en fonction des variations d'intensité enregistrées dans les bandes de fréquences basses.

9. Dispositif pour la détection d'objets (3) se trouvant sur un pare-brise (2), comprenant une unité d'enregistrement (4, 16) raccordée à une unité de traitement des données (5) destinée à considérer une section du pare-brise (2), laquelle unité de traitement de données (5) permet de commander des acteurs en guise de réaction à des objets repérés sur le pare-brise (2), sachant que l'unité d'enregistrement (4) est placée à un certain intervalle derrière le pare-brise (2) et est constituée d'un bloc de détection optique (4, 16), muni d'un obturateur (9), focalisé sur la face extérieure (7) du pare-brise (2), **caractérisé en ce que** l'unité de traitement des données (5) raccordée côté sortie au bloc de détection optique (4, 16), présente un module de transformation (11, 17) pour déterminer les spectres de fréquence de lieu (*S(f)*) des structures (*s*(*x*)) représentées sur l'image enregistrée et une unité d'évaluation (14, 20) pour évaluer les spectres de fréquence de lieu (*S(f)*) déterminées.

10. Dispositif selon la revendication 9 **caractérisé en ce que** l'on prévoit en guise de bloc de détection optique un capteur caméra avec un objectif à une lentille et un obturateur précédant cette dernière.

11. Dispositif selon la revendication 9 **caractérisé en ce que** l'on prévoit en guise de bloc de détection optique une ligne de capteurs (4, 16) avec un objectif à une lentille (6) et un obturateur (9) précédant cette dernière.

12. Dispositif selon la revendication 11, **caractérisé en ce que** l'on dispose entre le module de transformation (11, 17) et l'unité d'évaluation (14, 20) un filtre passe-bas (13, 18) fonctionnant de manière chronologiquement récursive.

13. Dispositif selon l'une des revendications 9 à 12 **caractérisé en ce qu'**est affectée à l'unité de traitement des données (5) une unité de surveillance de la saturation (12) pour réaliser une détermination de la saturation de chaque point d'image du bloc de détection optique (4).

14. Dispositif selon l'une des revendications 9 à 13 **caractérisé en ce que** l'unité d'évaluation prévue est une unité d'évaluation (20) fonctionnant selon des principes neuronaux.

15. Dispositif selon l'une des revendications 9 à 13 **caractérisé en ce que** le dispositif de détection (1) comprend une unité d'éclairage (D1, D2) pour éclairer le pare-brise (2) par l'intérieur par une lumière infrarouge, lequel dispositif d'éclairage (D1, D2) est conçu de manière à éclairer la section de pare-brise considérée selon différentes directions par rapport au point d'image central capté par le bloc de détection optique (4, 16).
